# EUROPEAN PATENT SPECIFICATION

(11) **EP 3 889 884 B1**
(45) Date of publication and mention of the grant of the patent: **21.01.2026**
(21) Application number: 21165434.8
(22) Date of filing: 29.03.2021
(51) Int. Cl.: G06T 5/77, G06T 5/50, G06T 5/80, G06T 5/60, G06N 3/04, G06N 3/045, G06N 3/047, G06N 3/088

(54) **METHOD AND SYSTEM FOR GUIDING A VEHICLE**
VERFAHREN UND SYSTEM ZUR FÜHRUNG EINES FAHRZEUGS
PROCÉDÉ ET SYSTÈME DE GUIDAGE D'UN VÉHICULE

(30) Priority: 31.03.2020 DE 102020108817
(43) Date of publication of application: 06.10.2021
(73) Proprietor: Connaught Electronics Ltd., Tuam, County Galway (IE)
(72) Inventor: SISTU, Ganesh, Tuam (IE); KUMBHAM, Mahendar, Tuam (IE)
(74) Representative: Jauregui Urbahn, Kristian

(56) References cited:
- US-A1- 2019 094 875
- US-A1- 2019 241 126
- US-A1- 2020 086 791

## Description

The present invention is directed to a method for guiding a vehicle at least in part automatically, wherein a first camera of the vehicle is used to generate a first image data set depicting an environment of the vehicle, wherein an impairment is present in a first field of view of the first camera. The invention further relates to a corresponding electronic vehicle guidance system, to a method for training an artificial neural network and to a computer program.

Partly or fully automated guiding of vehicles is often based on camera images, which are analyzed by means of computer vision algorithms, such as object detection, object tracking or segmentation algorithms. However, visual impairments in the field of view of the camera may lead to artifacts or obstructions in the camera image, see US 2019/0241126 A1. The impairment may for example correspond to contamination of the camera optics as in US 2020/0086791 A1 or on a windshield of the vehicle or to heater elements, such as heating wires, of the windshield. These artifacts may render the subsequent computer vision algorithms less reliable and therefore may have a negative impact on safety or comfort.

Conventional approaches to improve the image quality post hoc by image processing are limited in their performance or may even introduce new artifacts, see US 2019/094875 A1.

It is therefore an object of the present invention to provide an improved concept for guiding a vehicle at least in part automatically which improves safety and/or comfort for a user of the vehicle.

This object is achieved by the respective subject-matter of the independent claims. Preferred embodiments and further implementations are subject-matter of the depend claims.

The improved concept is based on the idea to use, in addition to image data of a first camera with an impairment in its field of view, image data of a second camera with a field of view that does not comprise the impairment. An artificial neural network is used to modify the image of the first camera including the impairment based on the information from the image of the second camera.

According to the improved concept, a method for guiding a vehicle at least in part automatically is provided according to claim 1. Therein, a first camera of the vehicle is used to generate a first image data set depicting an environment of the vehicle, wherein an impairment is present in a field of view of the first camera. A second camera of the vehicle is used to generate a second image data set depicting the environment, wherein the impairment is not present in the second field of view of the second camera.

Here and in the following, the impairment can be understood as one or more objects present in the field of view of the first camera causing an undesired feature in the first image data set or, in other words, an artifact in the first image data set. In particular, the effect of the impairment corresponds to said undesired feature or artifact.

The impairment can be understood as a visual obstruction present in the first field of view but not in the second field of view. In other words, the impairment is arranged between the first camera and the respective depicted environment but not between the second camera and the respective depicted environment.

In particular, the first image data set represents or depicts the impairment directly or indirectly, while the second image data set does not depict the impairment.

The impairment is, in other words, arranged outside of the second field of view of the second camera.

The impairment may for example contain a contamination on a lens or another optical element of the first camera.

In some implementations, a window or windshield of the vehicle may be arranged in the first field of view and the impairment may contain a contamination on the window or windshield.

In some implementations, the impairment can contain another object arranged in or on the window or windshield, for example one or more heating elements such as heating wires, of the window or windshield.

In particular, the first field of view and the second field of view overlap at least in part.

The first and the second camera may, however, have different imaging properties, for example different resolution, different maximum viewing angles and/or different mapping functions.

Therefore, the image data set generated by the first camera may be particularly suitable for guiding the vehicle at least in part automatically, while this may not be equally the case for the second image data set. Therefore, the improved concept combines information captured by the second camera, in particular the second image data set, with information captured by the first camera, in particular the first image data set, to get a modified version of the first image data set.

In particular, modifying the first image data set may comprise modifying parts or pixels of the first image data set while leaving other parts or pixels of the first image data set unchanged. In other words, the modified first image data set may be partially identical to the first image data set.

The input data may be identical to a combination of the first image data set and the second image data set. Alternatively, generating the input data may comprise processing or transforming the first image data set and/or the second image data set. The input data may comprise a combination of the first image data set and the processed or transformed second image data set. The input data may comprise a combination of the second image data set and the processed or transformed first image data set. The input data may comprise a combination of the processed or transformed first image data set and the processed or transformed second image data set.

The artificial neural network can be considered as a software module or, in other words, as an algorithm stored on a storage element, for example of the vehicle or the computing unit. The generator module can be considered as a submodule of the neural network.

Guiding the vehicle at least in part automatically may, for example, be performed by using an electronic vehicle guidance system of the vehicle, which may for example comprise the computing unit and/or the further computing unit. In some implementations, the electronic vehicle guidance system may also comprise the first and/or the second camera.

An electronic vehicle guidance system may be understood as an electronic system, configured to guide a vehicle in a fully automated or a fully autonomous manner and, in particular, without a manual intervention or control by a driver or user of the vehicle being necessary. The vehicle conducts required steering maneuvers, braking maneuvers and/or acceleration maneuvers and so forth automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

In particular, the artificial neural network is trained to remove the effect of the impairment based on the input data.

By means of a method according to the improved concept, artifacts due to impairments in the field of view may be reduced or completely avoided. The second camera or the second image data set, respectively, is used as an information source for modifying the first image data set. However, a quality, such as resolution and so forth, of the first image data set may be maintained. In particular, instead of simply copying a part of the second image data set to the first image data set, the first image data set is directly modified by the neural network. In this way, particularly high quality of the modified first image data set is achieved. As a consequence, subsequent algorithms using the modified first image data set for guiding the vehicle, for example, segmentation algorithms or object detection algorithms or object tracking algorithms, are provided with more reliable data and therefore may also generate a more reliable output. Hence, also the guidance of the vehicle may be more reliable and therefore lead to a higher safety and/or a higher degree of automation and therefore a higher degree of comfort for the user of the vehicle.

According to several implementations of the method for guiding a vehicle according to the improved concept, a mapping function of the first camera, in particular of a lens unit of the first camera, is different from a mapping function of the second camera, in particular of a lens unit of the second camera.

The mapping function of the lens unit can be understood as a function r(θ) mapping an angle θ from the optical axis of the lens unit to a radial shift r out of the image center. The function depends parametrically on the focal length f of the lens unit.

For example, a rectilinear lens unit has a gnomonic mapping function, in particular r(θ) = f tan(θ). In other words, a rectilinear lens unit maps straight lines in the real world to straight lines in the image, at least up to lens imperfections.

A non-rectilinear or curvilinear lens unit does, in general, not map straight lines to straight lines in the image. In particular, the mapping function of a non-rectilinear camera can be stereographic, equidistant, equisolid angle or orthographic or may be another non-gnomonic function.

In general, cameras with lens units having different mapping functions can be utilized in automotive applications for different purposes. For example, a rectilinear camera may be particularly useful for a realistic imaging of the environment and therefore, for example, for object tracking or object detection applications. On the other hand, rectilinear cameras may have restricted maximum viewing angle. Therefore, non-rectilinear cameras, that is cameras with a non-rectilinear lens unit, may be used in addition. For example, non-rectilinear cameras, such as fisheye cameras, may be used to generate a surround view around the vehicle. A drawback of the non-rectilinear cameras may, however, be that, due to the restricted resolution of the camera sensor and the particularly wide maximum viewing angle, the distance range, which can be image with high resolution, is effectively limited.

The improved concept makes use of the advantages of both types of cameras, in particular by reconstructing or modifying the first image data set using the information represented by the second image data set in addition.

According to several implementations, the first camera is a rectilinear camera and the second camera is a non-rectilinear camera, in particular a fisheye camera.

According to several implementations, the computing unit is used to rectify the second image data set depending on the mapping function of the second camera, and, in particular, depending on the mapping function of the first camera. The computing unit is used to generate the input data depending on the first image data set and the rectified second image data set.

The rectification of the second image data set may compensate the difference in the mapping functions of the first and the second camera.

In particular, the rectified second image data set corresponds to an image data set taken by a virtual camera having the same mapping function as the first camera but all other properties as the second camera.

The rectification may also compensate perspective differences in the first and the second image data set due to different poses of the first and the second camera.

Alternatively, the first image data set may be rectified or a combination of both.

According to several implementations, the computing unit is used to select a range of interest, ROI, from the rectified second image data set, in particular by cropping the rectified second image data set. The computing unit is used to generate the image data depending on the selected ROI.

The ROI may, for example, correspond to an image area of the rectified second image data set corresponding to the full image area of the first image data set.

According to several implementations, a window of the vehicle contains the impairment and the first camera is arranged on an interior side of the window.

According to several implementations, the window of the vehicle contains the impairment and the second camera is arranged on an exterior side of the window.

The impairment may for example comprise a contamination on the window or may comprise a heating element of the window.

A camera being arranged on a respective side of the window does not necessarily require a direct contact between the camera and the window.

The interior side of the window corresponds, in particular, to a side of the window facing a passenger compartment of the vehicle. In other words, the first camera may be arranged within the passenger compartment.

The exterior side of the window corresponds to a side of the window facing away from the passenger compartment, in particular to a side opposite to the interior side of the window. In other words, the second camera may be arranged outside of the passenger compartment.

The second camera may for example be arranged in or on a bumper of the vehicle, in or on a side mirror of the vehicle, on a roof of the vehicle or on another position of a body of the vehicle.

In other words, a part of the window containing the impairment is present in the first field of view of the first camera and not present in the second field of view of the second camera.

The window may be a front window or windshield or a rear window of the vehicle.

According to several implementations, the impairment comprises a heating element, in particular one or more heating wires, of the window.

According to several implementations, the neural network is designed as a generative adversarial network.

A generative adversarial network, GAN, comprises a generative network, in particular the generator module, and a discriminative network, also denoted as discriminator module.

The discriminator module can be considered as a further submodule of the neural network.

According to several implementations, a modification mask is generated by the generator module depending on the input data, wherein the modification mask indicates a region of the modified first image data set that has been modified by the generator module to remove the effect of the impairment. The vehicle is guided at least in part automatically depending on the modification mask.

The modification mask may, for example, be designed as a binary mask or map. For example, pixels or regions of the first image data set that are not modified by the generator module to remove the effect of the impairment may correspond to a logic 0 in the modification mask and pixels or regions that have been modified to remove the effect of the impairment may correspond to a logic 1 in the modification mask or vice versa.

The modification mask may for example be analyzed by the computing unit to guide the vehicle, in particular by using an object detection or object tracking algorithm or a segmentation algorithm. For example, said algorithms can assign a lower confidence value to regions in the modified first image data set that correspond to an actually modified region according to the modification mask. In this way, safety may be further increased.

According to several implementations, the computing unit is used to carry out a task comprising an object detection task and/or a segmentation task and/or an object tracking task based on the modified first image data set and the vehicle is guided at least in part automatically by using the computing unit or the further computing unit depending on a result of the task.

According to several implementations, the computing unit is used to carry out the task based on the modified first image data set and the modification mask to guide the vehicle at least in part automatically.

According to the improved concept, also a method for training an artificial neural network for guiding a vehicle at least in part automatically is provided. A first camera of the vehicle is used to generate a first training image data set depicting an environment of the vehicle, wherein an impairment is present in a first field of view of the camera. A second camera of the vehicle is used to generate a second training image data set depicting the environment, wherein the impairment is not present in a second field of view of the second camera. A computing unit of the vehicle is used to generate training input data depending on the first training image data set and the second training image data set. The computing unit is used to feed the training input data as an input to a generator module of the neural network to be trained. The first training image data set is modified by using the generator module to remove an effect of the impairment, in particular on the first image data set. The modified first image data set and a reference image data set depicting a potential further environment of the vehicle are provided as an input to a discriminator module of the neural network. The neural network is, in particular the generator module and the discriminator module are, adapted depending on an output of the discriminator module, in particular an output generated by the discriminator module depending on the modified first training image data set and the reference image data set.

The potential environment is not necessarily an actual environment of the vehicle. The potential environment, however, corresponds to a scenario, which shall be considered as a real scenario by the neural network. In particular, the impairment is not present in the potential environment. Consequently, the reference image data set does not contain an effect of the impairment.

The discriminator module and the generator module form a GAN. In this way, the discriminator module may be trained to distinguish real images, as defined by the reference data set, from fake images, as defined by the modified first training image data set. At the same time, the generator module is trained to modify the first image data set such that the discriminator module is not able to distinguish between a real and a fake image data set.

The adaption of the neural network corresponds to the training of the neural network, in particular by changing parameters, such as weights, of the neural network.

According to several implementations, the camera system is used to compute a value of a loss function depending on the output of the discriminator module and the neural network is adapted depending on the value of the loss function.

In particular, the neural network is adapted to minimize or optimize the loss function. The training may be considered as successful, once the value of the loss function is smaller than a predefined threshold value.

According to several implementations, the computing unit is used to compute the value of the loss function depending on the modified first image data set.

According to several implementations, a training modification mask is generated by the generator module depending on the training input data, wherein the training modification mask indicates a region of the modified first training image data set that has been modified to remove the effect of the impairment.

According to several implementations, the computing unit is used to compute the value of the loss function depending on the training modification mask.

Further implementations of the method for training an artificial neural network according to the improved concept follow directly from the implementations of the method for guiding a vehicle according to the improved concept and vice versa.

According to several implementations of the method for guiding a vehicle at least in part automatically according to the improved concept, the artificial neural network is trained by using a method for training an artificial neural network according to the improved concept.

According to the improved concept, also an electronic vehicle guidance system for guiding a vehicle at least in part automatically is provided. The vehicle guidance system comprises a computing unit, which is configured to receive a first image data set depicting an environment of the vehicle from a first camera of the vehicle, wherein an impairment is present in a field of view of the first camera. The computing unit is configured to receive a second image data set depicting the environment from a second camera of the vehicle, wherein the impairment is not present in the second field of view of the second camera. The computing unit is configured to generate input data depending on the first image data set and depending on the second image data set. The computing unit is configured to feed the input data to a generator module of an artificial neural network stored on a storage element of the vehicle guidance system, in particular of the computing unit. The computing unit is configured to modify the first image data set depending on the input data by applying the generator module to the input data to remove an effect of the impairment on the first image data set. The computing unit is configured to guide the vehicle at least in part automatically depending on the modified first image data set.

According to several implementations of the electronic vehicle guidance system, the artificial neural network has been trained according to a method for training an artificial neural network according to the improved concept.

According to several implementations of the electronic vehicle guidance system, the vehicle guidance system comprises the first camera and the first camera is configured to generate the first image data set.

According to several implementations, the vehicle guidance system comprises the second camera and the second camera is configured to generate the second image data set.

According to several implementations, the first camera is arranged on an interior side of a window of the vehicle, wherein the window contains the impairment.

According to several implementations, the second camera is arranged on an exterior side of the window, wherein the window contains the impairment.

According to several implementations, the impairment comprises a heating element, in particular one or more heating wires, of the window.

Further implementations of the electronic vehicle guidance system follow directly from the various implementations of the method for guiding a vehicle at least in part automatically according to the improved concept and vice versa. In particular, a vehicle guidance system according to the improved concept may be programmed or configured to perform a method according to the improved concept or the electronic vehicle guidance system performs such a method.

According to the improved concept, also a computer program comprising instructions is provided. When the instructions or the computer program are executed by an electronic vehicle guidance system according to the improved concept, in particular, an electronic vehicle guidance system according to the improved concept comprising the first and the second camera, the instructions cause the vehicle guidance system to carry out a method for guiding a vehicle according to the improved concept and/or a method for training an artificial neural network according to the improved concept.

According to the improved concept, also a computer readable storage medium storing a computer program according to the improved concept is provided.

The computer program as well as the computer readable storage medium can be considered as respective computer program products comprising the instructions.

Further features of the invention are apparent from the claims, the figures and the description of figures.

In the figures:
- Fig. 1: shows schematically a vehicle with an exemplary implementation of an electronic vehicle guidance system according to the improved concept,
- Fig. 2: shows schematically exemplary camera data comprising artifacts, and
- Fig. 3: shows a flow diagram of an exemplary implementation of methods according to the improved concept.

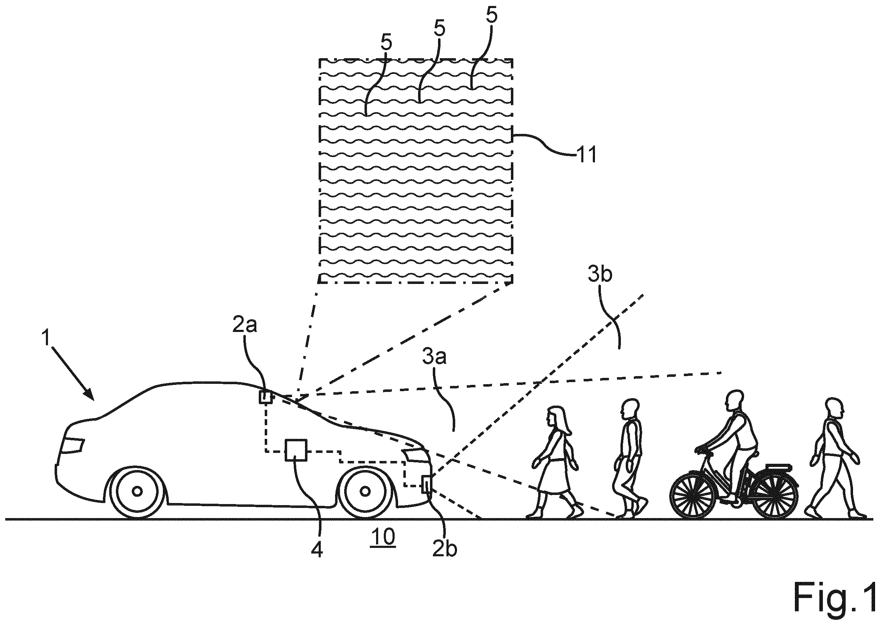

Fig. 1 shows schematically a vehicle 1 with an exemplary implementation of an electronic vehicle guidance system 10 according to the improved concept. The vehicle guidance system 10 comprises a computing unit 4, which may be part of an electronic control unit, ECU, of the vehicle 1 or the ECU may be part of the computing unit 4.

The vehicle guidance system 10 also comprises a first camera 2a with a first field of view 3a as well as second camera 2b with a second field of view 3b, which is different from the field of view 3a of the first camera 2a but overlaps with the first field of view 3a.

The first camera 2a may be implemented as a front camera, for example a rectilinear camera, while the second camera 2b may be implemented as a non-rectilinear camera, such as a fisheye camera.

In particular, the first and the second camera 2a, 2b are mounted at different positions of the vehicle 1. For example, the first camera 2a may be mounted in the interior of a passenger compartment of the vehicle 1 behind a windshield 11 of the vehicle 1. The second camera 2b, on the other hand, may be mounted outside of the passenger compartment and in particular the windshield 11 may not be located in the second field of view 3b.

The windshield 11 may contain an impairment, such as contamination on the windshield or heating wires 5 embedded in the windshield 11 or arranged on a surface of the windshield 11, as depicted schematically in Fig. 1.

The computing unit 4 comprises a storage element (not shown) on which an artificial neural network is stored, in particular a generative adversarial network, GAN, comprising a generator module 6a and a discriminator module 6b.

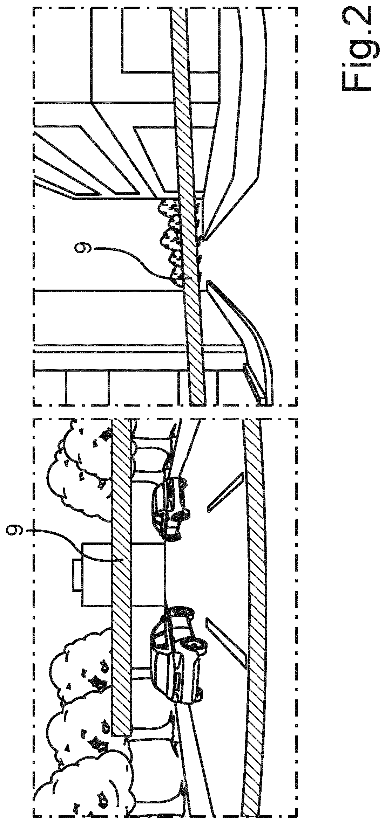

Fig. 2 shows schematically exemplary images generated by the first camera 2a comprising stripe-like artifacts 9, which are effects of the heating wires 5.

The artifacts 9 may be undesired for further tasks like object detection or object tracking algorithms or segmentation algorithms or further computer vision tasks for guiding the vehicle 1 at least in part automatically.

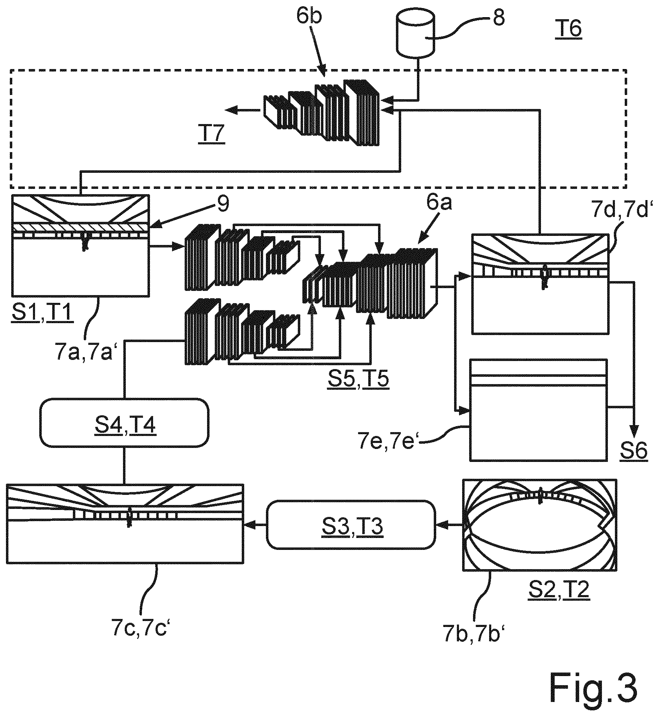

The function of the vehicle guidance system 10 is explained with respect to exemplary implementations of methods according to the improved concept by reference to Fig. 3.

Fig. 3 shows a flow diagram of an exemplary implementation of method for training an artificial neural network according to the improved concept as well as an exemplary implementation for a method for guiding a vehicle according to the improved concept.

First, a training phase of the vehicle guidance system 10 or the neural network, respectively, is described.

In step T1, a first training image data set 7a' depicting an environment of the vehicle 1 is generated by the first camera 2a, wherein the artifact 9 due to the impairment 5 in the first field of view 3a is present.

In step T2, the second camera 3b generates a second training image data set 7b' depicting the environment, wherein the effect of the impairment 5, that is the artifact 9, is not present in the second training image data set 7b'.

In step T3, the computing unit 4 transforms or rectifies the second training image data set 7b' to account for the different mapping functions of the cameras 2a, 2b and perspective effects. In other words, the computing unit 4 transforms the second training image data set 7b' into a rectified image data set corresponding to an image data set of a virtual rectilinear camera.

In step T4, the computing unit 4 selects a part of the rectified image data set 7c' corresponding to a range of interest, ROI, which matches for example the first image data set 7a'

In step T5, the computing unit 4 feeds the selected ROI of the rectified image data set 7c' and the first image data set 7a' to a generator module 6a of the neural network.

The generator module 6a modifies the first training image data set 7a' to remove the artifact 9 from the first training image data set 7a' by using the information provided by the ROI of the rectified image data set 7c'.

Therein, the generator module 6a may comprise one or more encoder blocks and a decoder block. The one or more encoder blocks may, in particular, be connected to the respective layers of the decoder block by respective side-skip connections to preserve fine details.

An output of the generator module 6a of step T5 comprises the modified first training image data set 7d' and optionally a binary mask 7e', wherein logic 0 corresponds to pixels in the modified first training image data set 7d' that have not been modified and logic 1 corresponds to the remaining pixels that have been modified to remove the artifact 9.

In step T6, a reference image data set depicting a potential further environment of the vehicle 1 is provided by a database 8 together with the modified first training image data set 7d' to the discriminator module 6b. The discriminator module 6b generates an output depending on the reference image data set and the modified first training image data set 7d'. In step T7, a loss function is computed and the generator module 6a as well as the discriminator module 6b are adapted depending on the loss function.

Therein, the loss function may depend on the output of the discriminator module 6b and the output of the generator module 6a, in particular the modified first training image data set 7d'.

If available, the loss function may also depend on the binary mask 7e'.

The training of the neural network, in particular, the adaption of the generator module 6a and the discriminator module 6b, is performed to optimize or minimize the loss function.

The described steps T1 to T7 are repeated until the loss function is smaller than a predefined threshold value. If this is the case, the generator module 6a has effectively learned to generate the modified first training image data set 7b' well enough such that the discriminator module 6b cannot distinguish between a real and a fake image.

Now, the productive phase of the vehicle guidance system 10 may begin.

Therein, steps S1 to S5 correspond essentially to the respective steps T1 to T5 described with respect to the training phase.

In particular, in step S1 the first camera 2a generates a first image data set 7a and in step S2, the second camera 2b generates a second image data set 7b.

In step S3, the second image data set 7b is rectified as described, and in step S4, the resulting rectified image data set 7c is used to select a ROI as described.

In step S5, the ROI selected from the rectified image data set 7c and the first image data set 7a are fed to the generator module 6a, which generates a modified first training image data set 7d to remove the artifact 9. Optionally, the generator module 6a may also generate a respective binary mask 7e, as described above.

In step S6, the electronic vehicle guidance system 10, in particular the computing unit 4 and/or one or more further computing units (not shown) of the vehicle guidance system 10, may use the modified first image data set 7d and, optionally, the binary mask 7e to perform a computer vision task, such as object tracking or object detection or semantic segmentation, to guide the vehicle 1 at least in part automatically.

As described, the improved concept allows to guide a vehicle at least in part automatically with a higher reliability leading to a higher degree of safety and comfort for a user of the vehicle.

In some implementations, the improved concept can be considered to leverage different cameras of the vehicle to create an effective multi-camera system to recover information hidden by artifacts caused by the impairment, such as heating wires.

For example, an image with artifacts caused the heating wires is captured by a front facing narrow angle camera. An overlapping scene region, captured by a front facing fisheye camera, is identified. A view part projection algorithm may be implemented, which may be followed by a registration algorithm, for example, using feature matching followed by image wrapping or using a deep neural network, to correct the fisheye image to a narrow angle image. In this context, almost a pixel to pixel mapping is possible. A convolutional neural network, CNN, with two input branches may be used to produce an in-painted image from the aligned images. The in-painted image has the missing information recovered.

The improved concept allows for an accurate removal of artifacts and reconstruction of the actual missing information by making use of information from another camera image.

## Claims

1. Method for guiding a vehicle (1) at least in part automatically, wherein a first camera (2a) of the vehicle (1) is used to generate a first image data set (7a) depicting an environment of the vehicle (1), a second camera (2b) of the vehicle (1) is used to generate a second image data set (7b) depicting the environment wherein an impairment (5) is a visual obstruction present in the first field of view but not in the second field of view;
- a computing unit (4) of the vehicle (1) is used to generate input data depending on the first image data set (7a) and the second image data set (7b);
**characterized in that**
- the computing unit (4) is used to feed the input data to a generator module (6a) of an artificial neural network (6a, 6b);
- the first image data set (7a) is modified depending on the input data by the generator module (6a) to remove an effect of the impairment (5); and
- the vehicle (1) is guided at least in part automatically depending on the modified first image data set (7d); wherein
a modification mask (7e) is generated by the generator module (6a) depending on the input data, wherein the modification mask (7e) indicates a region of the modified first image data set (7d) that has been modified to remove the effect of the impairment (5); and
- the vehicle (1) is guided at least in part automatically depending on the modification mask (7e), the modification mask is analyzed by the computing unit to guide the vehicle, by using an object detection or object tracking algorithm or a segmentation algorithm, wherein said algorithms assign a lower confidence value to regions in the modified first image data set that correspond to the modification mask.

2. Method according to claim 1, wherein
- a mapping function of the first camera (2a) is different from a mapping function of the second camera (2b); and/or
- the first camera (2a) is a rectilinear camera and the second camera (2b) is a non-rectilinear camera.

3. Method according to claim 2, wherein
- the computing unit (4) is used to rectify the second image data set (7b) depending on the mapping function of the second camera (2a); and
- the computing unit (4) is used to generate the input data depending on the first image data set (7a) and the rectified second image data set (7c).

4. Method according to one of the preceding claims, wherein
the neural network (6a, 6b) is designed as a generative adversarial network.

5. Method according to one of the preceding claims, wherein
- the computing unit (4) is used to carry out a task comprising an object detection task and/or a segmentation task and/or an object tracking task based on the modified first image data set (7d); and
- the vehicle (1) is guided at least in part automatically depending on a result of the task.

6. Method according to one of the preceding claims,
wherein to train the artificial neural network (6a, 6b)
- the first camera (2a) of the vehicle (1) is used to generate a first training image data set (7a') depicting the environment of the vehicle (1), wherein the impairment (5) is present in the first field of view (3a) of the first camera (2a);
- the second camera (2b) of the vehicle (1) is used to generate a second training image data set (7b') depicting the environment, wherein the impairment (5) is not present in the second field of view (3b) of the second camera (2b);
- the computing unit (4) of the vehicle (1) is used to generate training input data depending on the first training image data set (7a') and the second training image data set (7b');
- the computing unit (4) is used to feed the training input data to the generator module (6a) of the neural network (6a, 6b);
- the first training image data set (7a') is modified depending on the training input data by the generator module (6a) to remove an effect of the impairment (5);
- the modified first training image data set (7d') and a reference image data set depicting a potential further environment of the vehicle (1) are provided to a discriminator module (6b) of the neural network (6a, 6b); and
- the neural network (6a, 6b) is adapted depending on an output of the discriminator module (6b).

7. Method according to claim 6, wherein
- the computing unit (4) is used to compute a value of a loss function depending on the output of the discriminator module (6b); and
- the neural network (6a, 6b) is adapted depending on the value of the loss function.

8. Method according to claim 7, wherein
the computing unit (4) is used to compute the value of the loss function depending on the modified first image data set.

9. Method according to one of claims 1 to 5, wherein
the artificial neural network (6a, 6b) is trained by using a method according to one of claims 6 to 8.

10. Electronic vehicle guidance system for guiding a vehicle (1) at least in part automatically, wherein the vehicle guidance system (10) comprises a computing unit (4), which is configured to
- receive a first image data set (7a) depicting an environment of the vehicle (1) from a first camera (2a) of the vehicle (1),
- receive a second image data set (7b) depicting the environment from a second camera (2b) of the vehicle (1),
wherein an impairment (5) is a visual obstruction present in the first field of view but not in the second field of view;
the computing unit (4) is further configured to
- generate input data depending on the first image data set (7a) and the second image data set (7b);
**characterized in that** the computing unit (4) is configured to
- feed the input data to a generator module (6a) of an artificial neural network (6a, 6b) stored on a storage element of the vehicle guidance system (10);
- modify the first image data set (7a) depending on the input data by applying the generator module (6a) to the input data to remove an effect of the impairment (5);
- generate a modification mask (7e) by the generator module (6a) depending on the input data, wherein the modification mask (7e) indicates a region of the modified first image data set (7d) that has been modified to remove the effect of the impairment (5); and
- guide the vehicle (1) at least in part automatically depending on the modified first image data set (7d) and the modification mask (7e), the modification mask is analyzed by the computing unit to guide the vehicle, by using an object detection or object tracking algorithm or a segmentation algorithm, wherein said algorithms assign a lower confidence value to regions in the modified first image data set that correspond to the modification mask.

11. Electronic vehicle guidance system according to claim 10, wherein
- the vehicle guidance system (10) comprises the first camera (2a) and the first camera (2a) is configured to generate the first image data set (7a); and/or
- the vehicle guidance system (10) comprises the second camera (2b) and the second camera (2b) is configured to generate the second image data set (7b).

12. Electronic vehicle guidance system according to one of claims 10 or 11, wherein
- the first camera (2a) is arranged on an interior side of a window (11) of the vehicle (1), wherein the window (11) contains the impairment (5); and/or
- the second camera (2b) is arranged on an exterior side of the window (11).

13. Electronic vehicle guidance system according to claim 12, wherein
the impairment (5) comprises a heating element of the window (11).

14. Computer program product comprising instructions, which, when executed by an electronic vehicle guidance system (10) according to one of claims 10 to 13, cause the vehicle guidance system (10) to carry out a method according to one of claims 1 to 9.

## Patentansprüche

1. Verfahren zur wenigstens zum Teil automatischen Führung eines Fahrzeugs (1), wobei eine erste Kamera (2a) des Fahrzeugs (1) dazu verwendet wird, einen ersten Bilddatensatz (7a) zu erzeugen, der eine Umgebung des Fahrzeugs (1) abbildet, eine zweite Kamera (2b) des Fahrzeugs (1) dazu verwendet wird, einen zweiten Bilddatensatz (7b) zu erzeugen, der die Umgebung abbildet, wobei eine Beeinträchtigung (5) eine Sichtbehinderung ist, die im ersten Sichtfeld, aber nicht im zweiten Sichtfeld vorhanden ist;
- eine Recheneinheit (4) des Fahrzeugs (1) dazu verwendet wird, in Abhängigkeit von dem ersten Bilddatensatz (7a) und dem zweiten Bilddatensatz (7b) Eingangsdaten zu erzeugen;
**dadurch gekennzeichnet, dass**
- die Recheneinheit (4) dazu verwendet wird, die Eingangsdaten in ein Generatormodul (6a) eines künstlichen neuronalen Netzwerks (6a, 6b) einzuspeisen;
- der erste Bilddatensatz (7a) in Abhängigkeit von den Eingangsdaten durch das Generatormodul (6a) modifiziert wird, um eine Auswirkung der Beeinträchtigung (5) zu beseitigen; und
- das Fahrzeug (1) in Abhängigkeit von dem modifizierten ersten Bilddatensatz (7d) wenigstens zum Teil automatisch geführt wird; wobei
in Abhängigkeit von den Eingangsdaten eine Modifikationsmaske (7e) durch das Generatormodul (6a) erzeugt wird, wobei die Modifikationsmaske (7e) einen Bereich des modifizierten ersten Bilddatensatzes (7d) anzeigt, der modifiziert wurde, um die Auswirkung der Beeinträchtigung (5) zu beseitigen; und
- das Fahrzeug (1) in Abhängigkeit von der Modifikationsmaske (7e) wenigstens zum Teil automatisch geführt wird, wobei die Modifikationsmaske durch die Recheneinheit unter Verwendung eines Objekterkennungs- oder Objektverfolgungsalgorithmus oder eines Segmentierungsalgorithmus analysiert wird, um das Fahrzeug zu führen, wobei die Algorithmen Bereichen in dem modifizierten ersten Bilddatensatz, die der Modifikationsmaske entsprechen, einen niedrigeren Konfidenzwert zuweisen.

2. Verfahren nach Anspruch 1, wobei
- eine Abbildungsfunktion der ersten Kamera (2a) von einer Abbildungsfunktion der zweiten Kamera (2b) verschieden ist; und/oder
- die erste Kamera (2a) eine geradlinige Kamera ist und die zweite Kamera (2b) eine nicht-geradlinige Kamera ist.

3. Verfahren nach Anspruch 2, wobei
- die Recheneinheit (4) dazu verwendet wird, den zweiten Bilddatensatz (7b) in Abhängigkeit von der Abbildungsfunktion der zweiten Kamera (2a) zu berichtigen; und
- die Recheneinheit (4) dazu verwendet wird, die Eingangsdaten in Abhängigkeit von dem ersten Bilddatensatz (7a) und dem berichtigten zweiten Bilddatensatz (7c) zu erzeugen.

4. Verfahren nach einem der vorhergehenden Ansprüche, wobei
das neuronale Netzwerk (6a, 6b) als ein generatives gegnerisches Netzwerk *(Generative Adversarial Network)* konzipiert ist.

5. Verfahren nach einem der vorhergehenden Ansprüche, wobei
- die Recheneinheit (4) dazu verwendet wird, basierend auf dem modifizierten ersten Bilddatensatz (7d) eine Aufgabe auszuführen, die eine Objekterkennungsaufgabe und/oder eine Segmentierungsaufgabe und/oder eine Objektverfolgungsaufgabe umfasst; und
- das Fahrzeug (1) in Abhängigkeit von einem Ergebnis der Aufgabe wenigstens zum Teil automatisch geführt wird.

6. Verfahren nach einem der vorhergehenden Ansprüche, wobei zum Trainieren des künstlichen neuronalen Netzwerks (6a, 6b)
- die erste Kamera (2a) des Fahrzeugs (1) dazu verwendet wird, einen ersten Trainingsbilddatensatz (7a') zu erzeugen, der die Umgebung des Fahrzeugs (1) abbildet, wobei die Beeinträchtigung (5) in dem ersten Sichtfeld (3a) der ersten Kamera (2a) vorhanden ist;
- die zweite Kamera (2b) des Fahrzeugs (1) dazu verwendet wird, einen zweiten Trainingsbilddatensatz (7b') zu erzeugen, der die Umgebung abbildet, wobei die Beeinträchtigung (5) in dem zweiten Sichtfeld (3b) der zweiten Kamera (2b) nicht vorhanden ist;
- die Recheneinheit (4) des Fahrzeugs (1) dazu verwendet wird, in Abhängigkeit von dem ersten Trainingsbilddatensatz (7a') und dem zweiten Trainingsbilddatensatz (7b') Trainingseingangsdaten zu erzeugen;
- die Recheneinheit (4) dazu verwendet wird, die Trainingseingangsdaten in das Generatormodul (6a) des neuronalen Netzwerks (6a, 6b) einzuspeisen;
- der erste Trainingsbilddatensatz (7a') in Abhängigkeit von den Trainingseingangsdaten durch das Generatormodul (6a) modifiziert wird, um eine Auswirkung der Beeinträchtigung (5) zu beseitigen;
- der modifizierte erste Trainingsbilddatensatz (7d') und ein Referenzbilddatensatz, der eine potenzielle weitere Umgebung des Fahrzeugs (1) abbildet, einem Diskriminatormodul (6b) des neuronalen Netzwerks (6a, 6b) bereitgestellt werden; und
- das neuronale Netzwerk (6a, 6b) in Abhängigkeit von einer Ausgabe des Diskriminatormoduls (6b) angepasst wird.

7. Verfahren nach Anspruch 6, wobei
- die Recheneinheit (4) dazu verwendet wird, in Abhängigkeit von der Ausgabe des Diskriminatormoduls (6b) einen Wert einer Verlustfunktion zu berechnen; und
- das neuronale Netzwerk (6a, 6b) in Abhängigkeit von dem Wert der Verlustfunktion angepasst wird.

8. Verfahren nach Anspruch 7, wobei
die Recheneinheit (4) dazu verwendet wird, den Wert der Verlustfunktion in Abhängigkeit von dem modifizierten ersten Bilddatensatz zu berechnen.

9. Verfahren nach einem der Ansprüche 1 bis 5, wobei das künstliche neuronale Netzwerk (6a, 6b) unter Verwendung eines Verfahrens nach einem der Ansprüche 6 bis 8 trainiert wird.

10. Elektronisches Fahrzeugführungssystem zur wenigstens zum Teil automatischen Führung eines Fahrzeugs (1), wobei das Fahrzeugführungssystem (10) eine Recheneinheit (4) umfasst, die für Folgendes ausgelegt ist:
- Empfangen eines ersten Bilddatensatzes (7a), der eine Umgebung des Fahrzeugs (1) abbildet, von einer ersten Kamera (2a) des Fahrzeugs (1),
- Empfangen eines zweiten Bilddatensatzes (7b), der die Umgebung abbildet, von einer zweiten Kamera (2b) des Fahrzeugs (1),
wobei eine Beeinträchtigung (5) eine Sichtbehinderung ist, die im ersten Sichtfeld, aber nicht im zweiten Sichtfeld vorhanden ist;
die Recheneinheit (4) ferner für Folgendes ausgelegt ist:
- Erzeugen von Eingangsdaten in Abhängigkeit von dem ersten Bilddatensatz (7a) und dem zweiten Bilddatensatz (7b) ;
**dadurch gekennzeichnet, dass** die Recheneinheit (4) für Folgendes ausgelegt ist:
- Einspeisen der Eingangsdaten in ein Generatormodul (6a) eines künstlichen neuronalen Netzwerks (6a, 6b), das auf einem Speicherelement des Fahrzeugführungssystems (10) gespeichert ist;
- Modifizieren des ersten Bilddatensatzes (7a) in Abhängigkeit von den Eingangsdaten durch Einwirkenlassen des Generatormoduls (6a) auf die Eingangsdaten, um eine Auswirkung der Beeinträchtigung (5) zu beseitigen;
- Erzeugen einer Modifikationsmaske (7e) durch das Generatormodul (6a) in Abhängigkeit von den Eingangsdaten, wobei die Modifikationsmaske (7e) einen Bereich des modifizierten ersten Bilddatensatzes (7d) anzeigt, der modifiziert wurde, um die Auswirkung der Beeinträchtigung (5) zu beseitigen; und
- wenigstens zum Teil automatisches Führen des Fahrzeugs (1) in Abhängigkeit von dem modifizierten ersten Bilddatensatz (7d) und der Modifikationsmaske (7e), wobei die Modifikationsmaske durch die Recheneinheit unter Verwendung eines Objekterkennungs- oder Objektverfolgungsalgorithmus oder eines Segmentierungsalgorithmus analysiert wird, um das Fahrzeug zu führen, wobei die Algorithmen Bereichen in dem modifizierten ersten Bilddatensatz, die der Modifikationsmaske entsprechen, einen niedrigeren Konfidenzwert zuweisen.

11. Elektronisches Fahrzeugführungssystem nach Anspruch 10, wobei
- das Fahrzeugführungssystem (10) die erste Kamera (2a) umfasst und die erste Kamera (2a) dazu ausgelegt ist, den ersten Bilddatensatz (7a) zu erzeugen; und/oder
- das Fahrzeugführungssystem (10) die zweite Kamera (2b) umfasst und die zweite Kamera (2b) dazu ausgelegt ist, den zweiten Bilddatensatz (7b) zu erzeugen.

12. Elektronisches Fahrzeugführungssystem nach einem der Ansprüche 10 oder 11, wobei
- die erste Kamera (2a) auf einer Innenseite eines Fensters (11) des Fahrzeugs (1) angeordnet ist, wobei das Fenster (11) die Beeinträchtigung (5) enthält; und/oder
- die zweite Kamera (2b) auf einer Außenseite des Fensters (11) angeordnet ist.

13. Elektronisches Fahrzeugführungssystem nach Anspruch 12, wobei
die Beeinträchtigung (5) ein Heizelement des Fensters (11) umfasst.

14. Computerprogrammprodukt, das Anweisungen umfasst, die bei Ausführung durch ein elektronisches Fahrzeugführungssystem (10) nach einem der Ansprüche 10 bis 13 das Fahrzeugführungssystem (10) dazu veranlassen, ein Verfahren nach einem der Ansprüche 1 bis 9 durchzuführen.

## Revendications

1. Procédé pour guider un véhicule (1) au moins en partie automatiquement, dans lequel une première caméra (2a) du véhicule (1) est utilisée pour générer un premier ensemble de données d'image (7a) illustrant un environnement du véhicule (1), une seconde caméra (2b) du véhicule (1) est utilisée pour générer un second ensemble de données d'image (7b) illustrant l'environnement dans lequel une altération (5) est une obstruction visuelle présente dans le premier champ de vue et non dans le second champ de vue ;
- une unité de calcul (4) du véhicule (1) est utilisée pour générer des données d'entrée en fonction du premier ensemble de données d'image (7a) et du second ensemble de données d'image (7b) ;
**caractérisé en ce que**
- l'unité de calcul (4) est utilisée pour procurer les données d'entrée à un module générateur (6a) d'un réseau neuronal artificiel (6a, 6b) ;
- le premier ensemble de données d'image (7a) est modifié en fonction des données d'entrée par le module générateur (6a) pour éliminer un effet de l'altération (5) ; et
- le véhicule (1) est guidé au moins en partie automatiquement en fonction du premier ensemble modifié de données d'image (7d) ; dans lequel
un masque de modification (7e) est généré par le module générateur (6a) en fonction des données d'entrée, dans lequel le masque de modification (7e) indique une région du premier ensemble modifié de données d'image (7d) qui a été modifié pour éliminer l'effet de l'altération (5) ; et
- le véhicule (1) est guidé au moins en partie automatiquement en fonction du masque de modification (7e), le masque de modification est analysé par l'unité de calcul pour guider le véhicule, en utilisant un algorithme de détection d'objet ou de suivi d'objet ou un algorithme de segmentation, dans lequel lesdits algorithmes attribuent une valeur de confiance plus basse à des régions dans le premier ensemble modifié de données d'image qui correspondent au masque de modification.

2. Procédé selon la revendication 1, dans lequel
- une fonction de mappage de la première caméra (2a) est différente d'une fonction de mappage de la seconde caméra (2b) ; et/ou
- la première caméra (2a) est une caméra rectiligne et la seconde caméra (2b) est une caméra non rectiligne.

3. Procédé selon la revendication 2, dans lequel
- l'unité de calcul (4) est utilisée pour rectifier le second ensemble de données d'image (7b) en fonction de la fonction de mappage de la seconde caméra (2a) ; et
- l'unité de calcul (4) est utilisée pour générer les données d'entrée en fonction du premier ensemble de données d'image (7a) et du second ensemble rectifié de données d'image (7c).

4. Procédé selon l'une des revendications précédentes, dans lequel
le réseau neuronal (6a, 6b) est conçu sous forme de réseau antagoniste génératif.

5. Procédé selon l'une des revendications précédentes, dans lequel
- l'unité de calcul (4) est utilisée pour effectuer une tâche comprenant une tâche de détection d'objet et/ou une tâche de segmentation et/ou une tâche de suivi d'objet sur la base du premier ensemble modifié de données d'image (7d) ; et
- le véhicule (1) est guidé au moins en partie automatiquement en fonction d'un résultat de la tâche.

6. Procédé selon l'une des revendications précédentes, dans lequel pour entraîner le réseau neuronal artificiel (6a, 6b)
- la première caméra (2a) du véhicule (1) est utilisée pour générer un premier ensemble de données d'image d'entraînement (7a') illustrant l'environnement du véhicule (1), dans lequel l'altération (5) est présente dans le premier champ de vue (3a) de la première caméra (2a) ;
- la seconde caméra (2b) du véhicule (1) est utilisée pour générer un second ensemble de données d'image d'entraînement (7b') illustrant l'environnement, dans lequel l'altération (5) n'est pas présente dans le second champ de vue (3b) de la seconde caméra (2b) ;
- l'unité de calcul (4) du véhicule (1) est utilisée pour générer des données d'entrée d'entraînement en fonction du premier ensemble de données d'image d'entraînement (7a') et du second ensemble de données d'image d'entraînement (7b') ;
- l'unité de calcul (4) est utilisée pour procurer les données d'entrée d'entraînement au module générateur (6a) du réseau neuronal (6a, 6b) ;
- le premier ensemble de données d'image d'entraînement (7a') est modifié en fonction des données d'entrée d'entraînement par le module générateur (6a) pour éliminer un effet de l'altération (5) ;
- le premier ensemble modifié de données d'image d'entraînement (7d') et un ensemble de données d'image de référence illustrant un environnement supplémentaire potentiel du véhicule (1) sont fournis à un module discriminateur (6b) du réseau neuronal (6a, 6b) ; et
- le réseau neuronal (6a, 6b) est adapté en fonction d'une sortie du module discriminateur (6b).

7. Procédé selon la revendication 6, dans lequel
- l'unité de calcul (4) est utilisée pour calculer une valeur d'une fonction de perte en fonction de la sortie du module discriminateur (6b) ; et
- le réseau neuronal (6a, 6b) est adapté en fonction de la valeur de la fonction de perte.

8. Procédé selon la revendication 7, dans lequel l'unité de calcul (4) est utilisée pour calculer la valeur de la fonction de perte en fonction du premier ensemble modifié de données d'image.

9. Procédé selon l'une des revendications 1 à 5, dans lequel
le réseau neuronal artificiel (6a, 6b) est entraîné en utilisant un procédé selon l'une des revendications 6 à 8.

10. Système électronique de guidage de véhicule pour guider un véhicule (1) au moins en partie automatiquement, dans lequel le système de guidage de véhicule (10) comprend une unité de calcul (4), qui est configurée pour
- recevoir un premier ensemble de données d'image (7a) illustrant un environnement du véhicule (1) en provenance d'une première caméra (2a) du véhicule (1),
- recevoir un second ensemble de données d'image (7b) illustrant l'environnement en provenance d'une seconde caméra (2b) du véhicule (1),
dans lequel une altération (5) est une obstruction visuelle présente dans le premier champ de vue et non dans le second champ de vue ;
l'unité de calcul (4) est en outre configurée pour
- générer des données d'entrée en fonction du premier ensemble de données d'image (7a) et du second ensemble de données d'image (7b) ;
**caractérisé en ce que** l'unité de calcul (4) est configurée pour
- procurer les données d'entrée à un module générateur (6a) d'un réseau neuronal artificiel (6a, 6b) stocké sur un élément de stockage du système de guidage de véhicule (10) ;
- modifier le premier ensemble de données d'image (7a) en fonction des données d'entrée en appliquant le module générateur (6a) aux données d'entrée pour éliminer un effet de l'altération (5) ;
- générer un masque de modification (7e) par le module générateur (6a) en fonction des données d'entrée, dans lequel le masque de modification (7e) indique une région du premier ensemble modifié de données d'image (7d) qui a été modifié pour éliminer l'effet de l'altération (5) ; et
- guider le véhicule (1) au moins en partie automatiquement en fonction du premier ensemble modifié de données d'image (7d) et du masque de modification (7e), le masque de modification est analysé par l'unité de calcul pour guider le véhicule, en utilisant un algorithme de détection d'objet ou de suivi d'objet ou un algorithme de segmentation, dans lequel lesdits algorithmes attribuent une valeur de confiance plus basse à des régions dans le premier ensemble modifié de données d'image qui correspondent au masque de modification.

11. Système électronique de guidage de véhicule selon la revendication 10, dans lequel
- le système de guidage de véhicule (10) comprend la première caméra (2a) et la première caméra (2a) est configurée pour générer le premier ensemble de données d'image (7a) ; et/ou
- le système de guidage de véhicule (10) comprend la seconde caméra (2b) et la seconde caméra (2b) est configurée pour générer le second ensemble de données d'image (7b).

12. Système électronique de guidage de véhicule selon l'une des revendications 10 ou 11, dans lequel
- la première caméra (2a) est agencée sur un côté intérieur d'une vitre (11) du véhicule (1), dans lequel la vitre (11) contient l'altération (5) ; et/ou
- la seconde caméra (2b) est agencée sur un côté extérieur de la vitre (11).

13. Système électronique de guidage de véhicule selon la revendication 12, dans lequel
l'altération (5) comprend un élément chauffant de la vitre (11).

14. Produit programme d'ordinateur, comprenant des instructions, qui, lorsqu'elles sont exécutées par un système électronique de guidage de véhicule (10) selon l'une des revendications 10 à 13, amènent le système de guidage de véhicule (10) à effectuer un procédé selon l'une des revendications 1 à 9.
